# EUROPEAN PATENT APPLICATION

(11) **EP 4 606 667 A1**
(43) Date of publication of application: **27.08.2025**
(21) Application number: 24159105.6
(22) Date of filing: 22.02.2024
(51) Int. Cl.: B60W 30/14, B60W 50/14, B60W 30/18, B60W 50/00

(54) **CONTROLL ARRANGEMENT AND METHOD FOR CONTROLLING AN ADVANCED DRIVER-ASSISTANCE SYSTEM**

(71) Applicant: Scania CV AB, 151 87 Södertälje (SE)
(72) Inventor: SOMOS, Oliver, 129 57 Hägersten (SE); SANDSTEDT, Henrik, 129 57 Hägersten (SE); ALENIUS, Mikael, 141 72 Segeltorp (SE); MOHR, Frank, 139 35 Värmdö (SE)
(74) Representative: Scania CV AB

(57) **Abstract**

A control arrangement (100) and a method for controlling an advanced driver-assistance system (200) of a vehicle (1), said advanced driver-assistance system (200) being configured to automatically control vehicle speed and/or propose an appropriate action to a driver based on one or more control parameters including a target maximum lateral acceleration. The method comprises monitoring an obtained lateral acceleration of the vehicle (1) resulting from driver behavior when the vehicle travels one or more curves (24a, 24b) of a road section (22, 24). The method further comprises determining an expected lateral acceleration of the vehicle for said one or more curves (24a, 24b) based on a current target maximum lateral acceleration of the advanced driver-assistance system (200), and adjusting the target maximum lateral acceleration of the advanced driver-assistance system (200) in consideration of said driver behavior when the obtained lateral acceleration deviates from the expected lateral acceleration by at least a predefined threshold.

## Description

### TECHNICAL FIELD

The present disclosure relates in general to a method for controlling an advanced driver-assistance system of a vehicle. The present disclosure also relates in general to a control arrangement configured to control an advanced driver-assistance system of a vehicle.

The present disclosure also relates in general to a computer program and a computer-readable medium, as well as an advanced driver-assistance system and a vehicle.

### BACKGROUND

An advanced driver-assistance system (ADAS) is a system configured to assist a driver of a vehicle, e.g., for the purpose of increasing vehicle safety and/or driver experience. An advanced driver-assistance system may be configured to give warnings to a driver, propose appropriate action(s) to a driver of the vehicle, and/or to automatically control the vehicle. Examples of advanced driver-assistance systems include for example collision avoidance systems, lane departure warning systems, traffic sign recognitions systems, adaptive cruise control systems, curve speed cruise control systems, and curve speed guidance systems. An advanced driver-assistance system may in some cases be integrated with, or used in parallel with, a cruise control system configured to control travelling speed in dependence of a set speed.

US 2013/0332044 A1 discloses an apparatus for controlling a speed on a curved road in a smart cruise control system configured to obtain road coordinate information of a front portion of a vehicle from a navigation system based on a current location of the vehicle, calculate a curvature value of the curved road based on the road coordinate information, calculate a speed corresponding to the curvature value, and control a speed setting of the vehicle based on the speed corresponding to the curvature value when approaching the curved road.

The willingness of a driver to utilize an advance driver-assistance system is dependent on the advanced driver-assistance system behaving as may be expected and understood by the driver. Considering for example a curve speed cruise control system or a curve speed guidance system, a driver may in some cases perceive an obtained or proposed curve speed to be too high for safely driving through a curve or to be unduly low for driving through the curve. This may in turn reduce the driver's experience and cause annoyance to the driver of the vehicle. The driver may therefore decide to deactivate the advanced driver-assistance system, and thereby not take advantage of the benefits for which the advanced driver-assistance system has been designed, such as vehicle safety.

### SUMMARY

The object of the present invention is to improve driver experience of, and trust in, an advanced driver-assistance system designed for increased vehicle safety when driving through curves, and thereby increase a driver's willingness to use the advanced driver-assistance system.

The object is achieved by the subject-matter of the appended independent claim(s).

The present disclosure provides a method, performed by a control arrangement, for controlling an advanced driver-assistance system of a vehicle. Said advanced driver-assistance system is configured to automatically control vehicle speed and/or propose an appropriate action to a driver of the vehicle based on one or more control parameters, wherein said one or more control parameters include a target maximum lateral acceleration. The method comprises a step of monitoring an obtained lateral acceleration of the vehicle resulting from driver behavior when the vehicle travels one or more curves of a road section. The method further comprises a step of determining an expected lateral acceleration of the vehicle for said one or more curves of the road section based on a current target maximum lateral acceleration of the advanced driver-assistance system. The method also comprises a step of, when the obtained lateral acceleration deviates from the expected lateral acceleration by at least a predefined threshold, adjusting the target maximum lateral acceleration of the advanced driver-assistance system in consideration of said driver behavior.

The herein described method enables adjustment of the function of the advanced driver-assistance system to a driver's preferences, which in turn are derived from the driver's own behavior. The method therefore improves the driver experience of the advanced driver-assistance system. This in turn also increases the driver's trust in the advanced driver-assistance system. The likelihood that the driver will continue to utilize the advanced driver-assistance system, and thus take advantage of the benefits thereof, increases.

The method may further comprise a step of determining a target vehicle speed profile, or a target maximum vehicle speed, for an upcoming road section based on data relating to curvature of the upcoming road section and the target maximum lateral acceleration. This in turn may assist a driver to safely drive through curves of a road section.

The method may further comprise a step of, based on the obtained lateral acceleration, assessing the driver behavior in accordance with a predefined classification system to thereby identify a class that describes a degree of risk taking or aggressiveness of the driver behavior. If so, the step of adjusting the target maximum lateral acceleration of the advanced driver-assistance system may be performed based on the identified class. This in turn facilitates the method for not requiring having to determine the value to which the target maximum lateral acceleration should be adjusted each time an adjustment is to be made. Instead, each class of the predefined classification system may be associated with a predefined value to which the adjustment of the target maximum lateral acceleration is to be made.

The step of monitoring an obtained lateral acceleration of the vehicle may be performed in response to a determination of a driver-initiated acceleration or deceleration while the vehicle speed is automatically controlled by the advanced driver-assistance system. This e.g., avoids the need for continuously monitoring the obtained lateral acceleration resulting from driver behavior. Instead, the obtained lateral acceleration needs only to be monitored when the driver does not appear to be satisfied with the vehicle speed achieved through the control thereof performed by the advanced driver-assistance system. This in turn inter alia enables a reduction of the computational efforts needed.

Alternatively, the step of monitoring an obtained lateral acceleration of the vehicle may be performed while the vehicle is manually driven. In other words, said monitoring may be performed while the vehicle speed is not automatically controlled by the advanced driver-assistance system. This has the advantage of more accurately reflecting the driver's preferences and risk taking, and therefore allows for better adaptation of the target maximum lateral acceleration to the driver behavior.

The step of determining the expected lateral acceleration of the vehicle for said one or more curves of the road section may be performed based on historical data relating to lateral acceleration and/or vehicle speed for said one or more curves, vehicle configuration, vehicle load, and/or map data. This may in turn increase the accuracy in the determination of an expected lateral acceleration.

The present disclosure further relates to a computer program comprising instructions which, when executed by a computer, cause the computer to carry out the method as described above.

The present disclosure further relates to a computer-readable medium comprising instructions which, when executed by a computer, cause the computer to carry out the method as described above.

The present disclosure also provides a control arrangement configured to control an advanced driver-assistance system of a vehicle. Said advanced driver-assistance system is configured to automatically control vehicle speed and/or propose an appropriate action to a driver of the vehicle based on one or more control parameters, wherein said one or more control parameters include a target maximum lateral acceleration. The control arrangement is configured to monitor an obtained lateral acceleration of the vehicle resulting from driver behavior when the vehicle travels one or more curves of a road section. The control arrangement is further configured to determine an expected lateral acceleration of the vehicle for said one or more curves of the road section based on a current target maximum lateral acceleration of the advanced driver-assistance system. Moreover, the control arrangement is configured to, when the obtained lateral acceleration deviates from the expected lateral acceleration by at least a predefined threshold, adjust the target maximum lateral acceleration of the advanced driver-assistance system in consideration of said driver behavior.

The control arrangement provides the same advantages as described above with regard to the corresponding method for controlling an advanced driver-assistance system of a vehicle.

The control arrangement may further be configured to determine a target vehicle speed profile, or a target maximum vehicle speed, for an upcoming road section based on data relating to curvature of the upcoming road section and the target maximum lateral acceleration.

The control arrangement may further be configured to, based on the obtained lateral acceleration, assess the driver behavior in accordance with a predefined classification system to thereby identify a class that describes a degree of risk taking or aggressiveness of the driver behavior. If so, the control arrangement may be configured to perform the adjustment of the target maximum lateral acceleration of the advanced driver-assistance system based on the identified class.

The control arrangement may further be configured to find a recurring deviation obtained lateral acceleration of the vehicle and an, based on map data, anticipated lateral acceleration for a specific curve as the vehicle passes the specific curve multiple times, and based on the found recurring deviation, updating map data for said specific curve. This in turn allows for improving the accuracy of map data, which in turn may improve the reliability of the advanced driver-assistance system when automatically controlling the vehicle speed and/or proposing an appropriate action to a driver the next time the vehicle travels the same road section.

The present disclosure also relates to an advanced driver-assistance system configured to automatically control travelling speed of a vehicle and/or to provide guidance to a driver of the vehicle for safely driving the vehicle through one or more curves of a road, wherein said advanced driver-assistance system comprises the above described control arrangement.

The present disclosure also provides a vehicle comprising the control arrangement as described above. The vehicle may further comprise the advanced driver-assistance system described above. The vehicle may for example be land-based heavy vehicle, such as a bus or a truck, but is not limited thereto. The vehicle may be a combustion engine driven vehicle, a hybrid vehicle, a fully electrical vehicle, or a fuel cell vehicle.

### BRIEF DESCRIPTION OF DRAWINGS

- Fig. 1: illustrates a side view of an example of a vehicle,
- Fig. 2: schematically illustrates an exemplifying driving situation where a vehicle approaches a curvy road section,
- Fig. 3: represents a flowchart schematically illustrating one exemplifying embodiment of the herein described method for controlling an advanced driver-assistance system of a vehicle, and
- Fig. 4: schematically illustrates an exemplifying embodiment of a device which may comprise, consist of, or be comprised in a control arrangement configured to perform the herein described method for controlling an advanced-driver assistance system of a vehicle.

### DETAILED DESCRIPTION

The invention will be described in more detail below with reference to exemplifying embodiments and the accompanying drawings. The invention is however not limited to the exemplifying embodiments discussed and/or shown in the drawings, but may be varied within the scope of the appended claims. Furthermore, the drawings shall not be considered drawn to scale as some features may be exaggerated in order to more clearly illustrate the invention or features thereof.

The present disclosure provides a method for controlling an advanced driver-assistance system of a vehicle. The advanced driver-assistance system may be designed to increase vehicle safety when the vehicle travels through curves. According to a first alternative, said advanced driver-assistance system is configured to automatically control vehicle speed based on one or more control parameters, wherein said one or more control parameters include a target maximum lateral acceleration. According to a second alternative, the advanced driver system is configured to propose one or more appropriate actions to a driver of the vehicle based on one or more control parameters, wherein said one or more control parameters include a target maximum lateral acceleration. Examples of one or more appropriate actions that may be proposed to a driver of the vehicle include to release an accelerator pedal of the vehicle, to apply (e.g., maximum) braking force using auxiliary brakes of the vehicle, an appropriate vehicle speed or an appropriate vehicle acceleration/deceleration as the vehicle approaches a curve of a road section and/or while the vehicle travels such a curve. According to a third alternative, the advanced driver-assistance system may be configured to propose one or more appropriate actions to a driver of the vehicle based said one or more control parameters (which include a target maximum lateral acceleration) as well as automatically control the vehicle speed, for example in situations where the driver does not follow the proposed one or more appropriate actions.

The lateral acceleration of a vehicle is an important parameter to consider for ensuring that the vehicle may safely travel a curved road portion. If the lateral acceleration of the vehicle is too high, it may negatively affect the vehicle's stability and potentially cause the vehicle to roll over or lose traction. Therefore, the herein described advanced driver assistance-system utilizes a target maximum lateral acceleration as a control parameter. The target maximum lateral acceleration may have a default value set in dependence of vehicle configuration, and suitably also vehicle load. Said default value is set to have a sufficient safety margin to a critical lateral acceleration at which vehicle safety is jeopardized. Additional factors, such as weather conditions, may be considered when selecting a default value of the target maximum lateral acceleration. In fact, a predefined set of default values of target maximum lateral acceleration, each default value being dependent on the specific circumstances, may be stored in a look-up table, or the like, so as to be accessible to the advanced driver-assistance system.

Furthermore, the advanced driver-assistance system may for example be configured to determine a target vehicle speed profile for an upcoming road section based on data relating to curvature of the upcoming road section and the target maximum lateral acceleration. A vehicle speed profile is in the present disclosure considered to mean a profile which defines a vehicle speed variation over distance of a road section (such as an upcoming road section) and/or time. The advanced driver-assistance system may further be configured to control the vehicle speed in accordance with the determined target vehicle speed profile as the vehicle travels the upcoming road section, and/or be configured to propose one or more actions to a driver of the vehicle suitable for driving the vehicle at a speed consistent with said determined target vehicle speed profile. Alternatively, the advanced driver-assistance system may be configured to determine a target maximum vehicle speed for an upcoming road section based on data relating to curvature of the upcoming road section and the target maximum lateral acceleration. If so, the advanced driver-assistance system may also be configured to control the vehicle speed in dependence of the target maximum vehicle speed, or propose one or more actions to a driver of the vehicle to adhere to said target maximum vehicle speed, as the vehicle travels the upcoming road section.

The above mentioned data relating to curvature of an upcoming road section of the vehicle may for example be derived from map data in combination with knowledge of the geographical position of the vehicle, which in turn may be determined by usage of various positioning systems (such as GPS). Alternatively, data relating to curvature of an upcoming road section may be determined through usage of digital analysis of data captured by a camera, or the like, arranged onboard the vehicle. It should also be noted that the advanced driver-assistance system may, in addition to curvature, be configured to consider further characteristics of the upcoming road section, e.g., inclination and/or banking of the upcoming road section, when determining a target vehicle speed profile or a target maximum vehicle speed.

The herein described method comprises a step of monitoring an obtained lateral acceleration of the vehicle resulting from driver behavior when the vehicle travels one or more curves of a road section. The obtained lateral acceleration may be monitored in accordance with any previously known method therefore. For example, an obtained lateral acceleration may be calculated from measured parameters or can be measured directly using an accelerometer. The step of monitoring the obtained lateral acceleration is suitably performed while the driver operates the vehicle, i.e. in real-time. More specifically, the step of monitoring the obtained lateral acceleration of the vehicle resulting from driver behavior may be performed while the vehicle speed is automatically controlled by the advanced driver-assistance system. For example, the step of monitoring the obtained lateral acceleration of the vehicle may be performed in response to a determination of a driver-initiated acceleration or deceleration while the vehicle speed is automatically controlled by the advanced driver-assistance system. Such a driver-initiated acceleration or deceleration may be indicative that the driver considers the vehicle speed maintained by the advanced driver-assistance system to be too low or too high, respectively, for said one or more curves of the road section. Alternatively, the step of monitoring the obtained lateral acceleration of the vehicle may be performed while the vehicle is manually driven, i.e. when the vehicle speed is not automatically controlled.

The method further comprises a step of determining an expected lateral acceleration of the vehicle for said one or more curves of the road section based on a current target maximum lateral acceleration of the advanced driver-assistance system. In other words, said step comprises determining the lateral acceleration for said one or more curves that the advanced driver-assistance system would output (either through automatically controlling the vehicle speed or as a proposed action to a driver of the vehicle) in consideration of a currently set value of the target maximum lateral acceleration. The step of determining the expected lateral acceleration of the vehicle for said one or more curves of the road section may, in addition to the current target maximum lateral acceleration of the advanced driver-assistance system, be performed based on historical data relating to lateral acceleration and/or vehicle speed for said one or more curves. Such historical data may relate to previous occasions that the vehicle, or a similar vehicle, have travelled the same one or more curves. Alternatively, or additionally, the step of determining the expected lateral acceleration of the vehicle for said one or more curves of the road section may, in addition to the current target maximum lateral acceleration of the advanced driver-assistance system, be performed based on vehicle configuration, vehicle load and/or map data.

It may here be noted that, depending on the curvature of said one or more curves, and in some cases also characteristics of adjacent road sections, the expected lateral acceleration may or may not correspond to the currently set value of the target maximum lateral acceleration. In any case, the expected lateral acceleration for said one or more curves of the road section would not be higher than the target maximum lateral acceleration. This is because the vehicle speed would inherently be controlled, either automatically by the advanced driver-assistance system or by the driver, so that the resulting lateral acceleration would not exceed the currently set value of the target maximum lateral acceleration.

The herein described method also comprises a step of, when the obtained lateral acceleration deviates from the expected lateral acceleration by at least a predefined threshold, adjusting the target maximum lateral acceleration of the advanced driver-assistance system in consideration of said driver behavior. In other words, when the obtained lateral acceleration deviates from the expected lateral acceleration by at least a predefined threshold, a currently set value of target maximum lateral acceleration of the advanced driver-assistance system is adjusted to a new value of the target maximum lateral acceleration. Said new value of the target maximum lateral acceleration is in turn selected in dependence of the driver behavior, evidenced by the obtained lateral acceleration monitored as the vehicle travelled the one or more curves of the road section. The above mentioned predefined threshold value may be selected such that undue adjustment of the target maximum lateral acceleration may be avoided.

The method may thereafter comprise a step of determining a target vehicle speed profile, or a target maximum vehicle speed, for an upcoming road section of the vehicle based on data relating to curvature of the upcoming road section and the adjusted target maximum lateral acceleration.

As evident from the above, the herein described method may be performed considering the obtained lateral acceleration and the expected lateral acceleration of only one curve of a road section. However, considering a single curve may not always be sufficiently representative of a driver's behavior and the method may therefore suitably take into account a driver's behavior as the vehicle travels a plurality of curves before any adjustment of the target maximum lateral acceleration of the advanced driver-assistance system. This can for example be performed by comparing the obtained lateral acceleration and the expected lateral acceleration for each curve of the plurality of curves, to determine a possible deviation for each curve. Thereafter, an averaged value of the deviation for the curves may be considered when determining whether an adjustment of the target maximum lateral acceleration is to be made.

According to one alternative of the herein described method, the adjustment of the target lateral acceleration of the advanced driver assistance system may be made based on the actual deviation between the obtained lateral acceleration and the expected lateral acceleration. However, according to another alternative, the adjustment of the target maximum lateral acceleration of the advanced driver- assistance system may be made based on a predefined classification system. The predefined classification system may comprise a plurality of classes defining driver behavior. Each class of said plurality of classes of driver behavior may describe a degree of a driver's willingness to take risks or a driver's aggressiveness when driving through curves. Thus, the method may comprise a step of, based on the obtained lateral acceleration, assessing the driver behavior in accordance with such a predefined classification system to thereby identify a class that describes a degree of risk taking or aggressiveness of the driver behavior. In such a case, the step of adjusting the target maximum lateral acceleration of the advanced driver-assistance system may be performed based on the identified class. Each such class of the predefined classification system may be associated with a predefined value of a target maximum lateral acceleration to which the adjustment of a current target maximum lateral acceleration should be made. It should here be noted that such a predefined value of a target maximum lateral acceleration, given by a predefined class, may vary depending on vehicle configuration, current vehicle load, etc..

The advanced driver-assistance system, controlled by means of the herein described method, may comprise, or consist of, a curve speed cruise control system. It should however be noted that the curve speed cruise control system may be incorporated into another type of cruise control system, or be configured to operate in parallel with such a cruise control system. Examples of such other types of cruise control systems include adaptive cruise control systems, constant speed cruise control systems and/or predictive cruise control systems, but are not limited thereto.

Alternatively, the advanced driver-assistance system may comprise, or consist of, a curve speed guidance system. A curve speed guidance system is in the present disclosure considered to mean a system configured to propose one or more appropriate actions to a driver, such as a vehicle speed to be held by the driver, for safely driving the vehicle though one or more curves of a road. A curve speed guidance system may be integrated with, or used in parallel with, other types of advanced driver assistance systems, without departing from the present disclosure. The one or more appropriate actions may be communicated, by the advanced driver-assistance system, to the driver of the vehicle using any previously known means therefore, including presentation via visual means, audio means, and/or tactile means.

It should be noted that, in view of the herein described method comprising monitoring obtained lateral acceleration and comparing the obtained lateral acceleration with an expected lateral acceleration for one or more curves of a road section, the herein described method also enables to use the result of said comparison for updating map data relating to one or more specific curves, if desired. For example, a driver may decide to drive more slowly through a specific curve, which in turn results in a lower lateral acceleration of the vehicle being obtained, compared to what may be expected based on the map data, e.g., because improper banking of the road and/or impaired vision in the curve. Data, obtained from one or more vehicles comprising the herein described advanced driver-assistance system, demonstrating recurring deviations in the obtained lateral acceleration compared to what may be expected for a specific curve in consideration of current map data may thereafter be used for updating the map data relating to said specific curve. This in turn improves the map data and may therefore also improve traffic safety in the future when the advanced driver-assistance system is used by the vehicle or other road users.

The performance of the herein described method for controlling an advanced driver-assistance system of a vehicle may be governed by programmed instructions. These programmed instructions may take the form of a computer program which, when executed by a computer, cause the computer to effect desired forms of control action. Such a computer may for example be comprised in the control arrangement as described herein. A computer is in the present disclosure considered to mean any hardware or hardware/firmware device implemented using processing circuity such as, but not limited to, a processor, Central Processing Unit (CPU), a controller, an arithmetic logic unit (ALU), a digital signal processor, a microcomputer, a field programmable gate array (FPGA), a System-on-Chip (SoC), a programmable logic unit, a microprocessor, an application-specific integrated circuit, or any other device capable of electronically performing operations in a defined manner.

The above described programmed instructions, which may take the form of a computer program, may be stored on a computer-readable medium. Hence, the present disclosure also relates to a computer-readable medium storing instructions, which when executed by computer, cause the computer to carry out the herein described method for controlling an advanced driver-assistance system of a vehicle. The computer-readable medium may be a non-transitory computer-readable medium, such as a tangible electronic, magnetic, optical, infrared, electromagnetic, and/or semiconductor system, apparatus, and/or device.

The present disclosure further relates to a control arrangement configured to control an advanced driver-assistance system of a vehicle. The control arrangement may be configured to perform any one of the steps of the method for controlling an advanced driver-assistance system of a vehicle as described above.

More specifically, in accordance with the present disclosure, a control arrangement configured to control an advanced driver-assistance system of a vehicle is provided. Said advanced driver-assistance system is configured to automatically control vehicle speed and/or propose one or more appropriate actions to a driver of the vehicle based on one or more control parameters, wherein said one or more control parameters include a target maximum lateral acceleration. The control arrangement is configured to monitor an obtained lateral acceleration of the vehicle resulting from driver behavior when the vehicle travels one or more curves of a road section. The control arrangement is further configured to determine an expected lateral acceleration of the vehicle for said one or more curves of the road section based on a current target maximum lateral acceleration of the advanced driver-assistance system. The control arrangement is also configured to, when the obtained lateral acceleration deviates from the expected lateral acceleration by at least a predefined threshold, adjust the target maximum lateral acceleration of the advanced driver-assistance system in consideration of said driver behavior.

The control arrangement may comprise one or more control units. In case of the control arrangement comprising a plurality of control units, each control unit may be configured to control a certain function/step or a certain function/step may be divided between more than one control units. The control arrangement may be a control arrangement of an advanced driver-assistance system. Alternatively, the control arrangement may be any other control arrangement of the vehicle but configured to communicate with an advanced driver-assistance system for the purpose of performing the herein described method.

The control arrangement may further be configured to, based on the obtained lateral acceleration, assess the driver behavior in accordance with a predefined classification system to thereby identify a class that describes a degree of risk taking or aggressiveness of the driver behavior. If so, the control arrangement may be configured to perform the adjustment of the target maximum lateral acceleration of the advanced driver-assistance system based on the identified class.

The control arrangement may also be configured to find a recurring deviation between obtained lateral acceleration of the vehicle and an, based on map data, anticipated lateral for a specific curve as the vehicle passes the specific curve multiple times. If so, the control arrangement may further be configured to, based on the found recurring deviation, updating map data for said specific curve. It should here be noted that the anticipated lateral acceleration may be determined solely based on map data, whereas the above described expected lateral acceleration also takes into account a currently set value of the target maximum lateral acceleration of the advanced driver-assistance system. Thus, the anticipated lateral acceleration may or may not correspond to the expected lateral acceleration depending on the circumstances. The map data may be updated for the vehicle comprising the advanced driver-assistance system, but may also be updated in a database stored remotely from the vehicle such that it can be used also for other road users, if desired.

The present disclosure also provides an advanced driver-assistance system configured to automatically control travelling speed of a vehicle and/or to provide guidance to a driver of the vehicle for safely driving the vehicle through one or more curves of a road. The advanced driver-assistance system may comprise the above described control arrangement, or at least being configured to communicate with the above described control arrangement such that the control arrangement may control the advanced driver-assistance system. The advanced driver-assistance system may for example be, or comprise, a curve speed cruise control (CSCC) system. Alternatively, the advanced driver-assistance system may for example be, or comprise, a curve speed guidance system.

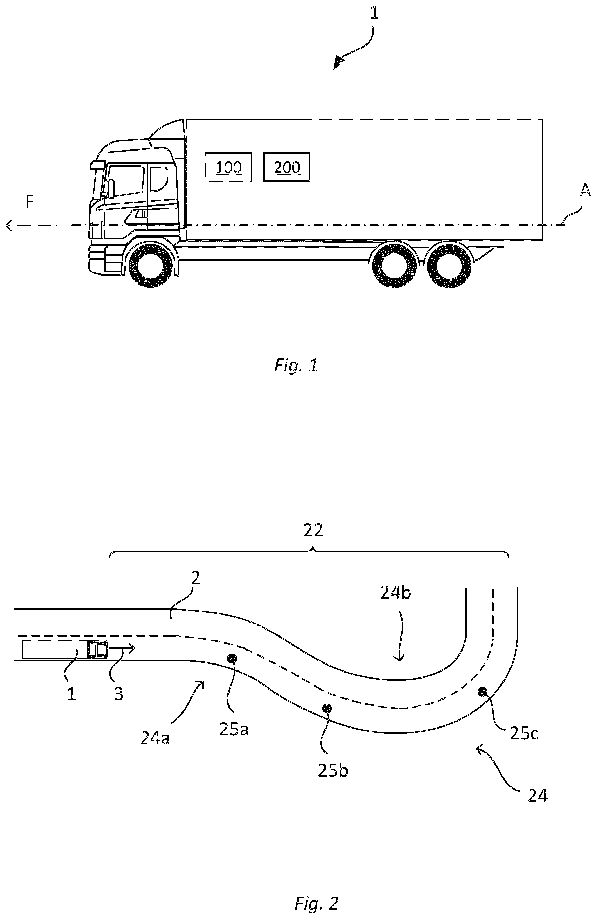

Figure 1 illustrates a side view of an example of a vehicle 1, here illustrated as a truck. The vehicle 1 has a longitudinal axis A. Furthermore, the primary direction of travel of the vehicle 1 is in the figure illustrated by arrow F.

The vehicle 1 may comprise an advanced driver-assistance system, schematically represented by box 200. The advanced driver-assistance system 200 may for example be, or comprise, a curve speed cruise control system or a curve speed guidance system. The vehicle 1 may further comprise a control arrangement, schematically represented by box 100. The control arrangement 100 may be configured to control the advanced driver-assistance system 200 in accordance with the herein described method therefore.

Figure 2 schematically illustrates an exemplifying driving situation where a vehicle 1, such as the vehicle shown in Figure 1, travels on a road 2 in a direction illustrated by the arrow 3. An upcoming road section of the road 2, illustrated by bracket 22 for ease of illustration, may comprise a curvy road section 24 that may require a reduction of the travelling speed of the vehicle 1 compared to a current vehicle speed in order for the vehicle to safely pass the curvy road section 24. More specifically, the vehicle speed may need to be reduced to avoid a too high lateral acceleration of the vehicle when the vehicle passes along the curvy road section 24. The curvy road section 24 is in the figure illustrated as composed of a first slight curve 24a to the right as seen in the travelling direction of the vehicle, followed by a substantially U-shaped curve 24b. The maximum allowable vehicle speed along the upcoming road section 22 to ensure that the vehicle 1 does not reach a too high lateral acceleration and thus may safely pass the curvy road section 24 would typically vary between different distance points 25a, 25b, 25c of the upcoming road section 22. Assuming that the vehicle is driven along the curvy road section 24 at a constant speed, a greater lateral acceleration would be obtained at distance point 25c compared to at distance points 25a and 26b as a result of the curvature of the road 2. This in turn means that the maximum allowable speed of the vehicle, should typically be lower at distance point 25c compared to distance point 25a in order to avoid reaching a lateral acceleration at which the vehicle safety may be jeopardized. The advanced driver-assistance system as described herein may therefore be configured to propose one or more appropriate actions, such as a reduction of vehicle speed to a maximum allowable speed e.g., at the different distance points 25a, 25b, 25c, and/or to automatically control the vehicle speed according to a vehicle speed profile, determined in dependence of the target maximum allowable lateral acceleration, when the vehicle is driven through the curvy road section 24.

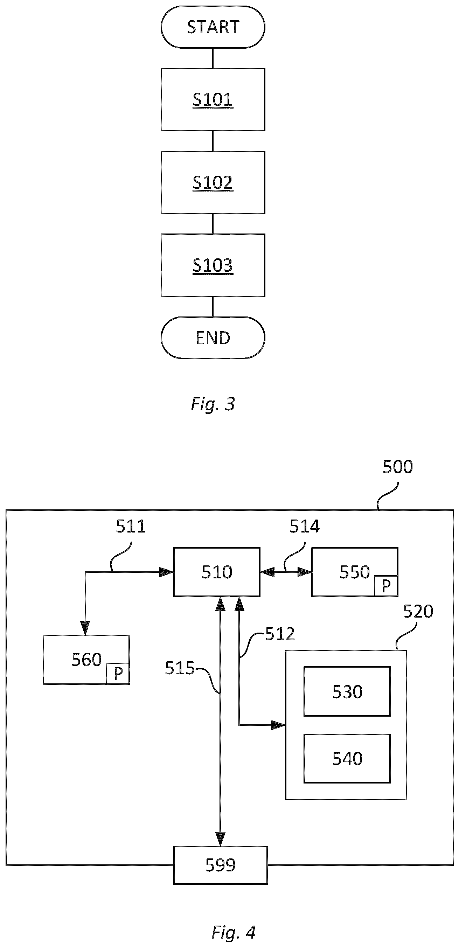

Figure 3 represents a flowchart schematically illustrating one exemplifying embodiment of the herein described method for controlling an advanced driver-assistance system of a vehicle. As previously mentioned, the advanced driver-assistance system is configured to automatically control vehicle speed and/or propose an appropriate action to a driver of the vehicle based on one or more control parameters, wherein said one or more control parameters include a target maximum lateral acceleration. The method may for example be initiated when the vehicle is set into motion from a standstill or when the advanced driver-assistance system is activated.

The method comprises a step S101 of monitoring an obtained lateral acceleration of the vehicle resulting from driver behavior when the vehicle travels, i.e. is driven through, one or more curves of a road section.

The method further comprises a step S102 of determining an expected lateral acceleration of the vehicle for said one or more curves of the road section based on a current target maximum lateral acceleration of the advanced driver-assistance system.

The method further comprises a step S103 of, when the obtained lateral acceleration deviates from the expected lateral acceleration by at least a predefined threshold, adjusting the target maximum lateral acceleration of the advanced driver-assistance system in consideration of said driver behavior.

After step S103, the method may be ended as shown in the figure, or returned to start.

Figure 4 schematically illustrates an exemplifying embodiment of a device 500. The control arrangement 100 described above may for example comprise the device 500, consist of the device 500, or be comprised in the device 500.

The device 500 comprises a non-volatile memory 520, a data processing unit 510 and a read/write memory 550. The non-volatile memory 520 has a first memory element 530 in which a computer program, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

There is provided a computer program P that comprises instructions for controlling an advanced driver-assistance system of a vehicle, wherein said advanced driver-assistance system is configured to automatically control vehicle speed and/or propose an appropriate action to a driver of the vehicle based on one or more control parameters. The one or more control parameters include a target maximum lateral acceleration. The computer program comprises instructions for monitoring an obtained lateral acceleration of the vehicle resulting from driver behavior when the vehicle travels one or more curves of a road section. The computer program further comprises instructions for determining an expected lateral acceleration of the vehicle for said one or more curves of the road section based on a current target maximum lateral acceleration of the advanced driver-assistance system. The computer program also comprises instructions for, when the obtained lateral acceleration deviates from the expected lateral acceleration by at least a predefined threshold, adjusting the target maximum lateral acceleration of the advanced driver-assistance system in consideration of said driver behavior.

The program P may be stored in an executable form or in a compressed form in a memory 560 and/or in a read/write memory 550.

The data processing unit 510 may perform one or more functions, i.e. the data processing unit 510 may effect a certain part of the program P stored in the memory 560 or a certain part of the program P stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is adapted to communicate with the data processing unit 510 via a data bus 514. The communication between the constituent components may be implemented by a communication link. A communication link may be a physical connection such as an optoelectronic communication line, or a non-physical connection such as a wireless connection, e.g. a radio link or microwave link.

When data are received on the data port 599, they may be stored temporarily in the second memory element 540. When input data received have been temporarily stored, the data processing unit 510 is prepared to effect code execution as described above.

Parts of the methods herein described may be effected by the device 500 by means of the data processing unit 510 which runs the program stored in the memory 560 or the read/write memory 550. When the device 500 runs the program, methods herein described are executed.

## Claims

1. A method, performed by a control arrangement (100), for controlling an advanced driver-assistance system (200) of a vehicle (1),
said advanced driver-assistance system (200) being configured to automatically control vehicle speed and/or propose an appropriate action to a driver of the vehicle (1) based on one or more control parameters, wherein said one or more control parameters include a target maximum lateral acceleration,
the method comprising the following steps:
monitoring (S101) an obtained lateral acceleration of the vehicle (1) resulting from driver behavior when the vehicle travels one or more curves (24a, 24b) of a road section (22, 24),
determining (S102) an expected lateral acceleration of the vehicle (1) for said one or more curves (24a, 24b) of the road section (22, 24) based on a current target maximum lateral acceleration of the advanced driver-assistance system (200), and
when the obtained lateral acceleration deviates from the expected lateral acceleration by at least a predefined threshold, adjusting (S103) the target maximum lateral acceleration of the advanced driver-assistance system (200) in consideration of said driver behavior.

2. The method according to claim 1, further comprising a step of:
determining a target vehicle speed profile, or a target maximum vehicle speed, for an upcoming road section (22) based on data relating to curvature of the upcoming road section (22) and the target maximum lateral acceleration.

3. The method according to any one of claims 1 or 2, wherein the method further comprises a step of:
based on the obtained lateral acceleration, assessing the driver behavior in accordance with a predefined classification system to thereby identify a class that describes a degree of risk taking or aggressiveness of the driver behavior, and
wherein the step of adjusting the target maximum lateral acceleration of the advanced driver-assistance system (200) is performed based on the identified class.

4. The method according to any one of the preceding claims, wherein the step of monitoring (S101) an obtained lateral acceleration of the vehicle (1) is performed in response to a determination of a driver-initiated acceleration or deceleration while the vehicle speed is automatically controlled by the advanced driver-assistance system (200).

5. The method according to any one of claims 1 to 3, wherein the step of monitoring (S101) an obtained lateral acceleration of the vehicle (1) is performed while the vehicle (1) is manually driven.

6. The method according to any one of the preceding claims, wherein the step of determining (S102) the expected lateral acceleration of the vehicle (1) for said one or more curves (24a, 24b) of the road section (22, 24) is performed based on historical data relating to lateral acceleration and/or vehicle speed for said one or more curves (24a, 24b), vehicle configuration, vehicle load, and/or map data.

7. A computer program comprising instructions which, when executed by a computer, cause the computer to carry out the method according to any one of the preceding claims.

8. A computer-readable medium comprising instructions which, when executed by a computer, cause the computer to carry out the method according to any one of claims 1 to 6.

9. A control arrangement (100) configured to control an advanced driver-assistance system (200) of a vehicle (1),
said advanced driver-assistance system (200) being configured to automatically control vehicle speed and/or propose an appropriate action to a driver of the vehicle (1) based on one or more control parameters, wherein said one or more control parameters include a target maximum lateral acceleration,
the control arrangement (100) being configured to:
monitor an obtained lateral acceleration of the vehicle (1) resulting from driver behavior when the vehicle travels one or more curves (24a, 24b) of a road section (22, 24),
determine an expected lateral acceleration of the vehicle (1) for said one or more curves (24a, 24b) of the road section (22, 24) based on a current target maximum lateral acceleration of the advanced driver-assistance system (200), and
when the obtained lateral acceleration deviates from the expected lateral acceleration by at least a predefined threshold, adjust the target maximum lateral acceleration of the advanced driver-assistance system (200) in consideration of said driver behavior.

10. The control arrangement (100) according to claim 9, wherein the control arrangement (100) is configured to determine a target vehicle speed profile, or a target maximum vehicle speed, for an upcoming road section (22) based on data relating to curvature of the upcoming road section (22) and the target maximum lateral acceleration.

11. The control arrangement (100) according to any one of claims 9 or 10, wherein the control arrangement (100) is configured to:
based on the obtained lateral acceleration, assess the driver behavior in accordance with a predefined classification system to thereby identify a class that describes a degree of risk taking or aggressiveness of the driver behavior, and
perform the adjustment of the target maximum lateral acceleration of the advanced driver-assistance system (200) based on the identified class.

12. The control arrangement (100) according to any one of claims 9 to 11, further configured to:
find a recurring deviation between obtained lateral acceleration of the vehicle (1) and an, based on map data, anticipated lateral acceleration for a specific curve (24a, 24b) as the vehicle (1) passes the specific curve (24a, 24b) multiple times, and
based on the found recurring deviation, updating map data for said specific curve (24a, 24b).

13. An advanced driver-assistance system (200) configured to automatically control travelling speed of a vehicle (1) and/or to provide guidance to a driver of the vehicle (1) for safely driving the vehicle (1) through one or more curves (24a, 24b) of a road (2), the advanced driver-assistance system (200) comprising the control arrangement (100) according to any one of claims 9 to 12.

14. A vehicle (1) comprising the control arrangement (100) according to any one of claims 9 to 12.
